# EUROPEAN PATENT APPLICATION

(11) **EP 4 272 533 A1**
(43) Date of publication of application: **08.11.2023**
(21) Application number: 21914243.7
(22) Date of filing: 27.12.2021
(51) Int. Cl.: A01D 34/00

(54) **INTELLIGENT MOWER AND CONTROL METHOD AND SYSTEM THEREFOR, AND STORAGE MEDIUM**

(30) Priority: 30.12.2020 CN 202011606822; 30.12.2020 CN 202023283031 U
(71) Applicant: Globe (Jiangsu) Co., Ltd., Changzhou, Jiangsu 213023 (CN)
(72) Inventor: WALLMARK, Carl, hangzhou, Jiangsu 213023 (CN)
(74) Representative: Bergenstråhle & Partners AB
(86) International application number: PCT/CN2021/141561
(87) International publication number: WO 2022/143506

(57) **Abstract**

The disclosure provides a robotic mower and a control method, a system and a storage medium thereof. The control method includes: controlling the robotic mower to move to a starting point; selecting a path map from a pre-stored path map set; and controlling the robotic mower to move and work according to the selected path map. The path map set is a path map pre-planned according to different moving angles according to a working area of the robotic mower. With the disclosure, it may ensure that the robotic mower walks along different paths each time it works, thereby avoiding ruts caused by repeated rolling of the working area.

## Description

### TECHNICAL FIELD

The disclosure relates to a technical field of robotic mower, in particular to a robotic mower and a control method, system and storage medium thereof.

### BACKGROUND

The robotic mower is a garden tool used for mowing, cutting vegetation, etc., and generally includes a self-propelled mechanism, a cutter mechanism, and a power source. The power source may be a gasoline engine, a battery pack, and the like. Conventional robotic mowers are usually designed based on the principle of random cutting or optimized paths. The robotic mower designed with the random cutting principle is to mow or cut vegetation in a random way, the random cutting method can still cover the entire area when the robotic mower does not know its own position. However, this efficiency is relatively low, and it may usually take several days to complete a working area, and it is impossible to estimate the time for mowing and know when the lawn will be ready. The robotic mower designed based on the principle of optimal path will plan the optimal running path in advance according to the working area map, and then the robotic mower will always mow along the optimal path every time it works, which will repeatedly crushes the lawn or vegetation and may damage the lawn or vegetation.

### SUMMARY

The disclosure provides a robotic mower and a control method, system and a storage medium thereof, used to solve a technical problem of repeatedly crushing lawns or vegetation of the robotic mower adopting optimized paths in the conventional art.

The disclosure provides the control method of the robotic mower, the control method includes:
controlling the robotic mower to move to a starting point;
selecting a path map from a pre-stored path map set; and
controlling the robotic mower to move and work according to the selected path map,
wherein the path map set is a path map pre-planned according to different moving angles according to a working area of the robotic mower.

In an alternative embodiment, an obtaining method of the path map set includes: defining a working area map of the robotic mower;
respectively planning the path maps when the robotic mower moves along different moving angles in the working area according to the working area map of the robotic mower to form the path map set.

In an alternative embodiment, in an operation of respectively planning the path maps when the robotic mower moves along different moving angles in the working area according to the working area map of the robotic mower, optimizing the path map to minimize the number of turns of the robotic mower.

In an alternative embodiment, the moving angle of the robotic mower is between 0° and 180°.

In an alternative embodiment, defining the working area map of the robotic mower includes controlling the robotic mower to move along an edge of the working area, and collecting and saving a position of the working area so as to obtain the working area map.

In an alternative embodiment, defining the working area map of the robotic mower further includes:
controlling the robotic mower to move along an edge of an obstacle in the working area,
collecting and saving a position of the obstacle, and marking the position of the obstacle as an exclusion area in the working area map.

In an alternative embodiment, a position sensor is adopted to define the working area map of the robotic mower.

In an alternative embodiment, the position sensor includes a global positioning module.

In an alternative embodiment, controlling the robotic mower to move and work according to the selected path map includes: when the power of the robotic mower is insufficient, controlling the robotic mower to return to a charging station and recording a returning position point of the robotic mower, after charging is completed, the robotic mower returning to the returning position point and continuing to move along an original path.

In an alternative embodiment, controlling the robotic mower to move and work according to the selected path map includes: when weather conditions are not suitable for the robotic mower to work, controlling the robotic mower to return to the charging station and recording returning position point of the robotic mower, after charging is completed or when the weather conditions are suitable for the robotic mower to work, the robotic mower returning to the returning position point and continuing to move along original path.

In an alternative embodiment, the path map set is a path map pre-planned according to different moving angles and working widths according to the working area of the robotic mower.

In an alternative embodiment, the control method of the robotic mower further includes:
presetting a mowing period, the robotic mower performing mowing operations within the preset mowing period, and stopping mowing out of the preset mowing period.

In an alternative embodiment, selecting a path map from the pre-stored path map set includes randomly selecting a path map from the pre-stored path map set.

In an alternative embodiment, selecting the path map from the pre-stored path map set includes selecting a path map from the pre-stored path map set each time according to an increment or decrement of the moving angle.

In an alternative embodiment, selecting the path map from the pre-stored path map set includes selecting a path map from the pre-stored path map set according to a received external instruction.

The disclosure further provides a control system of a robotic mower, including:
a moving module, configured to control the robotic mower to move to a starting point;
a map selection module, configured to select a path map from a pre-stored path map set, wherein the path map set is a path map planned in advance according to different moving angles according to a working area of the robotic mower;
an operation module, controlling the robotic mower to move according to the selected path map.

In an alternative embodiment, the control system of the robotic mower further includes a path map set obtaining module including:
an area map definition module, configured to define a working area map of the robotic mower;
a path map planning module, configured to respectively plan the path maps of the robotic mower according to the working area map of the robotic mower when moving along different moving angles in the working area to form the path map set.

In an alternative embodiment, the path map planning module further includes a path optimization module, configured to minimize a number of turns of the robotic mower to optimize the path map.

In an alternative embodiment, the moving angle of the robotic mower is between 0° and 180°.

The area map definition module further includes a map obtaining module, configured to control the robotic mower to walk along an edge of the working area, collect and save a position of the working area so as to obtain the working area map.

In an alternative embodiment, the path map set obtaining module further includes an exclusion module, configured to control the robotic mower to walk along an edge of an obstacle in the working area, collect and save a position of the obstacle, and mark the position of the obstacle as an exclusion area in the working area map.

In an alternative embodiment, the operation module further includes a charging module, configured to control the robotic mower to return to a charging station and record a returning position point of the robotic mower when the power of the robotic mower is insufficient, after charging completed, the robotic mower returning to the returning position point and continuing to move along original path.

In an alternative embodiment, the path map planning module is further configured to respectively plan the path maps of the robotic mower when moving along different moving angles and different working widths in the working area according to the working area map of the robotic mower to form the path map set.

In an alternative embodiment, the operation module further includes a charging module, configured to control the robotic mower to return to a charging station and record a returning position point of the robotic mower when weather conditions are not suitable for the robotic mower to work, after charging completed or when the weather conditions are suitable for the robotic mower to mow, the robotic mower returning to the returning position point and continuing to move along an original path.

In an alternative embodiment, the control system of the robotic mower includes a mowing period setting module, configured to preset a mowing period, so as to control the robotic mower to mow in the preset mowing period and stop mowing out of the preset mowing period.

In an alternative embodiment, the map selection module includes a first map selection module, configured to randomly select a path map from the pre-stored path map set.

In an alternative embodiment, the map selection module includes a second map selection module, configured to select a path map from the pre-stored path map set each time according to an increment or decrement of the moving angle.

In an alternative embodiment, the map selection module includes a third map selection module, configured to select a path map from the pre-stored path map set according to a received external instruction.

The disclosure further provides a robotic mower, including:
a body,
a position sensor, arranged on the body; and
a control unit, arranged on the body, including a processor and a memory coupled to each other. The memory stores program instructions, which is executed by the processor to perform any of control method of the robotic mower described below is realized.

In an alternative embodiment, the position sensor includes a global positioning module.

In an alternative embodiment, the robotic mower further includes a rain and snow sensor.

The disclosure further provides a storage medium including a program. When the program runs on a computer, the program enables the computer to perform any control method of the robotic mower described below.

With the robotic mower and its control method, system and storage medium of the disclosure, each time the robotic mower mows, it selects any path map from the pre-stored path map set, so that a walking path of the robotic mower is different each time, which avoids a problem of repeated crushing and forming ruts when moving along a fixed path.

Compared with a random operation method, the robotic mower and its control method, system and storage medium of the disclosure may not only cover 100% of the working area, but also reduce unnecessary repeated operations and reduce use of parts.

The robotic mower and its control method, system and storage medium of the disclosure may complete work of the entire working area in one operation if the battery allows it.

### BRIEF DESCRIPTION OF THE DRAWINGS

FIG. 1 is a flowchart of a control method of a robotic mower of the disclosure.
FIG. 2 is a schematic view of a path planning of the robotic mower of the disclosure.
FIGs. 3a-3d are path maps obtained for different moving angles and working widths through the control method of the robotic mower of the disclosure.
FIG. 4 is a block view of a control system of the robotic mower of the disclosure.
FIG. 5 is a block view of a path map set obtaining module of the disclosure.
FIG. 6 is a block view of a control unit of the disclosure.
FIG. 7 is a block view of the robotic mower of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

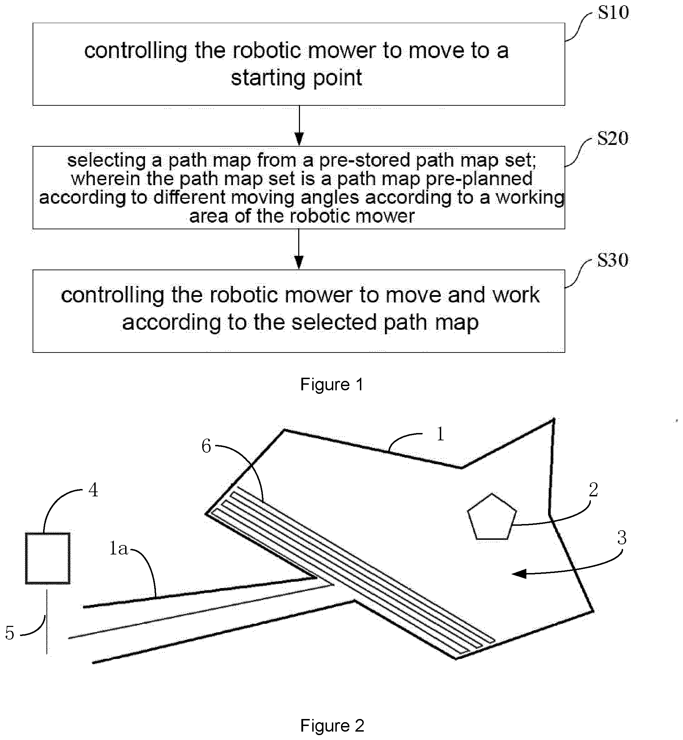

Please refer to FIG. 1 through FIG. 7. It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

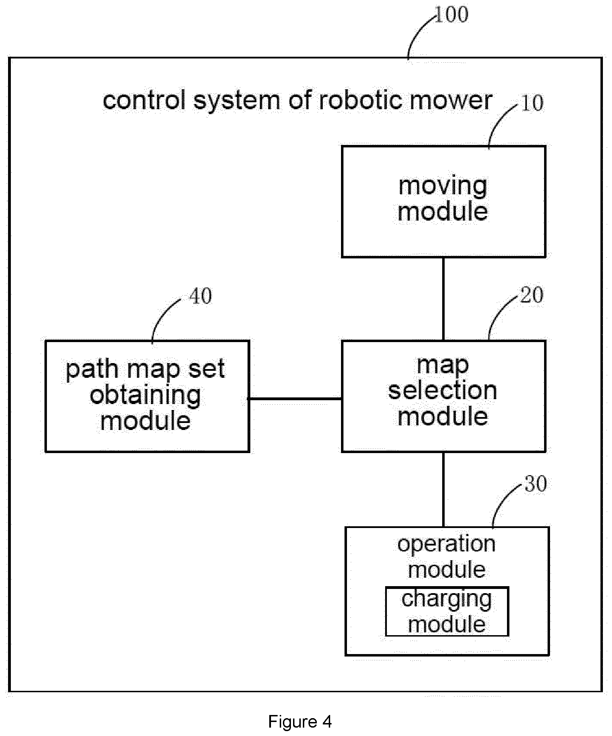

In order to save time of mowing and improve an efficiency of mowing, a robotic mower will use an optimized path map to move. Since each mowing operation follows a same path of movement, it may crush a growth of lawn or vegetation in rutted areas. In order to solve this problem, the disclosure provides a control method of the robotic mower and a control system. Every time the robotic mower runs, it will randomly select a path map from a pre-stored path map set (a path of each path map is different), and then follow the selected path map to move and work, thus avoiding repeated rolling of the lawn or vegetation, and better protecting or preparing the lawn or vegetation. FIG. 1 shows a schematic flowchart of the control method of the robotic mower of the disclosure, and FIG. 4 shows a block view of the control system of the robotic mower of the disclosure.

Please refer to FIG. 1. The control method of the robotic mower includes following operations:
S10: controlling the robotic mower to move to a starting point;
S20: selecting a path map from a pre-stored path map set; the path map set being a path map pre-planned according to different moving angles according to a working area of the robotic mower, and
S30: controlling the robotic mower to move and work according to the selected path map.

Please refer to FIG. 1. When executing S10, each time a mowing operation is performed, the robotic mower needs to be controlled to move to the starting point. The starting point may be, for example, a selected point within the working area of the robotic mower, or a location of a charging station, or a certain point in a passage connecting the charging station with the working area.

Please refer to FIG. 1. When executing S10, it is necessary to store, download or input the path map sets containing different paths in a control unit of the robotic mower in advance, so as to facilitate a call when the robotic mower needs to move. FIG. 2 is a schematic view of obtaining the path map set.

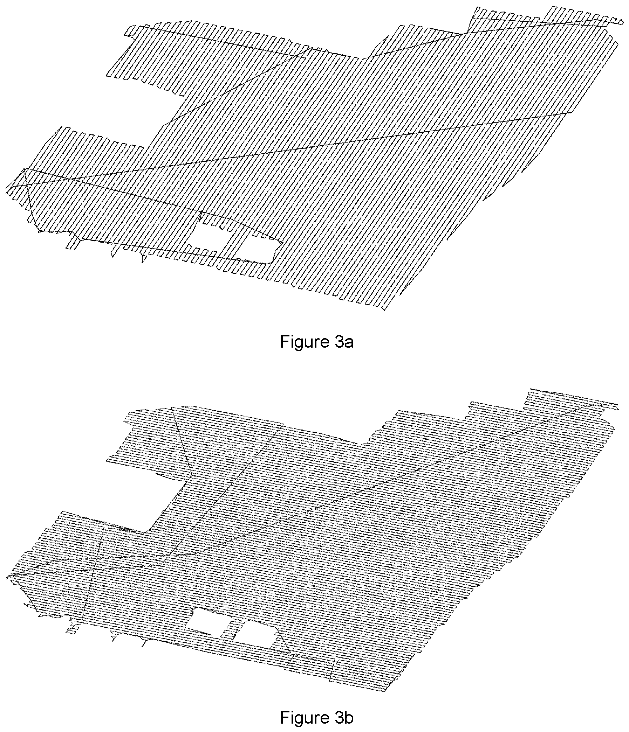

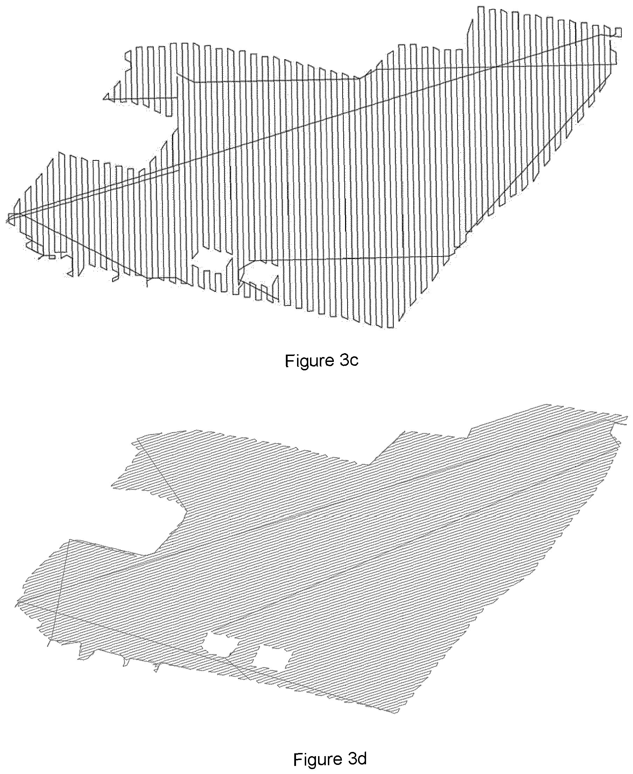

Please refer to FIG. 2. First, it is necessary to define a working area map of the robotic mower. The robotic mower may be controlled to walk along an edge 1 of the working area 3, and then real-time position coordinates of the robotic mower (as a position of the working area) are collected through a position sensor during walking and stored in a storage device as a map data of the working area. A position sensor may be a satellite-based navigation device, such as a global positioning system module, referred to as a GPS module. Signals from the GPS module may be corrected to improve a positioning accuracy (such as real-time dynamic differential GPS, real-time dynamic carrier-phase differential GPS, and the like). It should be understood that, in some embodiments, the position sensor may also use a laser and an optical device as a sensor of positioning, for example. Usually, there will be some obstacles 2 (such as trees, bushes, pools, some raised structures out of a ground, etc.) in the working area 3 of the robotic mower. During an operation of the robotic mower, obstacles 2 of this type need to be bypassed and are therefore marked in the working area map by means of a related art. Specifically, for example, through controlling the robotic mower to walk along the edge of the obstacle in the working area 3, a position of the obstacle is collected and saved by the above-mentioned position sensor, and is marked in the working area map as an exclusion area in the working area map, so that the exclusion area may be automatically bypassed during a subsequent path planning. Next, after a definition of the working area map of the robotic mower is completed, it is necessary to respectively plan the path map 6 when the robotic mower moves along different moving angles in the working area 3 according to the working area map of the robotic mower, so as to form the path map set. The moving angle may be defined as an angle between a moving direction of the robotic mower and a certain reference line (such as a straight line segment of a boundary line of the working area 3). The moving angle of the robotic mower is any value between 0° and 180°. As an example, with an angle variable of 5°, the path maps may be respectively obtained when the moving angles are 0° (180°), 5°, 10°, 15°, ..., 170° and 175° to form a path map set. The angle variable may be set as required. The smaller the angle variable is, the more path maps are generated, and vice versa. It should be noted that, in a process of path planning, each of the path maps may also be optimized to minimize the number of turns of the robotic mower or to minimize a total path length. It can be understood that, for example, the path map set is a path map pre-planned according to different moving angles and working widths according to the working area of the robotic mower. Different path maps may be generated by adjusting the moving angle and working width. The working width is defined as a distance between two parallel inner lanes of the robotic mower, or a distance between locally parallel lanes in a case of curved-shaped lanes. FIGs 3a-3d respectively correspond to the planned path maps for different moving angles and different working widths.

As shown in FIG. 2, positions of the charging station 4 and a guide wire 5 are also defined on the map of the working area, so that the robotic mower may be conveniently controlled to enter the station for charging and to exit the station for operation. The charging station 4 may be set on the edge 1 of the working area, or may be set at a position away from the working area as shown in FIG. 2.

Please refer to FIG. 1. When executing S20 and S30, each time a mowing operation is performed, a path map needs to be selected from the pre-stored path map set, and then the robotic mower is controlled to move according to the selected path map.

In S20, a path map is selected from the stored path map set according to a specified map selection method. For example, a path map may be randomly selected from the pre-stored path map set in a random manner, or a path map may be selected from the pre-stored path map set each time according to an increment or decrement of the moving angle, or a path map may be selected from the pre-stored path map set according to a received external instruction, so that it may basically ensure that the walking path is different for each mowing operation in multiple mowing operations (there may also be two repetitions when randomly selected), which avoids repeated rolling and forming ruts when walking along a fixed path. When a path map is selected from the pre-stored path map set each time according to the increment or decrement of the moving angle, for example, it may be incremented sequentially with a change of moving angle of 5°, 10°, 15°, 30° (or other suitable values) each time, or a path map may be selected from the pre-stored path map set, until all moving angles are traversed, and then a path map is selected from the pre-stored path map set in an increment or decrement manner.

In S30, during the mowing operation, due to a large area of the working area or a limited battery capacity of the robotic mower, it is impossible to complete the mowing operation of the entire working area at one time. When a power of the robotic mower is insufficient, the robotic mower may be controlled to return to the charging station and record a current position of the robotic mower (which means a returning position point), and after a charging is completed, the robotic mower returns to the returning position point and continues to walk along the original path.

In S30, during the mowing operation, when the weather conditions are not suitable for the robotic mower to work, such as rain, snow, hail, strong wind and other bad weather, the robotic mower is controlled to return to the charging station and record the returning position point of the robotic mower. After charging completed or when the weather conditions are suitable for the robotic mower to mow, the robotic mower returns to the returning position point and continues to move along the original path. The robotic mower may, for example, judge whether the current weather condition is suitable for the robotic mower by receiving a local weather forecast, or monitor the current weather condition through sensors that may monitor weather conditions such as a rain and snow sensor and wind speed sensors mounted on a body of the robotic mower. The control unit of the robotic mower determines whether the robotic mower suspends or stops the mowing operation according to the monitored weather condition.

It should be noted that the robotic mower control method of the disclosure further includes operations of preset mowing period. Users may set working schedule of the robotic mower according to actual needs. The robotic mower executes the mowing operation within the preset mowing period, and suspends or stops the mowing operation during other periods other than the preset mowing period. For example, the mowing period may be preset, for example, between 10:00 and 20:00, so as to avoid affecting rest of users or neighbors during operations outside the preset mowing period.

Please refer to FIG. 4. The embodiment of the disclosure further introduces a control system 100 of the robotic mower for implementing the control method above. The control system 100 of the robotic mower includes a moving module 10, a map selection module 20, an operation module 30 and a path map set obtaining module 40. The moving module 10 is used to control the robotic mower to move to the starting point. The map selection module is used to select the path map from the pre-stored path map set according to a preset selection rule, the path map set is a path map planned in advance according to different moving angles according to the working area of the robotic mower. The operation module 30 controls the robotic mower to move according to the selected path map. The path map set obtaining module 40 is used to obtain the path map set.

Please refer to FIG. 4. The operation module 30 further includes a charging module 31, which is used to control the robotic mower to return to the charging station and record the returning position point of the robotic mower when the power of the robotic mower is insufficient, after charging completed, the robotic mower returns to the returning position point and continues to move along the original path. The charging module 31 is further used to control the robotic mower to return to the charging station and record the returning position point of the robotic mower when weather conditions are not suitable for the robotic mower to work, after charging completed or when the weather conditions are suitable for the robotic mower to mow, the robotic mower returns to the returning position point and continues to move along the original path.

In the disclosure, the control system 100 of the robotic mower further includes a mowing period setting module (not shown), which is used to preset a mowing period, so as to control the robotic mower to mow in the preset mowing period and stop mowing during other periods of time.

In the disclosure, the map selection module 20 includes a first map selection module, a second map selection module and a third map selection module. The first map selection module is used to randomly select the path map from the pre-stored path map set. The second map selection module is used to select the path map from the pre-stored path map set each time according to the increment or decrement of the moving angle. The third map selection module is used to select the path map from the pre-stored path map set according to the received external instruction.

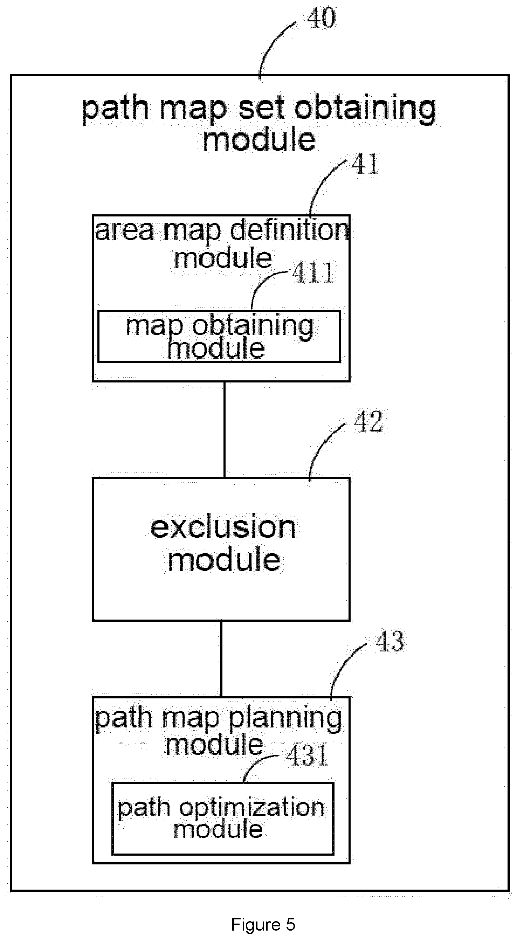

Please refer to FIG. 5. The path map set obtaining module 40 further includes area map definition module 41, an exclusion module 42 and path map planning module 43. The area map definition module 41 is used to define the working area map of the robotic mower. The exclusion module 42 is used to control the robotic mower to walk along the edge of the obstacle in the working area, collect and save a position of the obstacle, and mark it as the exclusion area in the working area map. The area map definition module 43 is used to respectively plan the path maps of the robotic mower according to the working area map of the robotic mower when it moves along different moving angles in the working area to form the path map set. The area map definition module 41 further includes a map obtaining module 411, which is used to control the robotic mower to walk along the edge of the working area, collect and save the position of the working area so as to obtain the working area map. The path map planning module 43 further includes a path optimization module 431, which is used to minimize the number of turns of the robotic mower to optimize the path map.

It should be noted that the control system 100 of the robotic mower of the disclosure is a system corresponding to the above-mentioned control method of the robotic mower. Functional modules or functional sub-modules in the control system 100 of the robotic mower respectively correspond to corresponding operations in the control method of the robotic mower. The control system 100 of the robotic mower of the disclosure may be implemented in cooperation with the control method of the robotic mower. Relevant technical details mentioned in the control method of the robotic mower of the disclosure are still valid in the control system 100 of the robotic mower, and will not be repeated here in order to reduce repetition. Correspondingly, the relevant technical details mentioned in the control system 100 of the robotic mower of the disclosure may also be applied in the above control method of the robotic mower.

It should be noted that the above-mentioned functional modules or functional sub-modules may be fully or partially integrated into one physical entity during actual implementation, and may also be physically separated. And these units may all be implemented in a form of software calling through processing components, or may be all implemented in a form of hardware, or some units may also be implemented in the form of software calling through processing components, and some units may be implemented in the form of hardware. In addition, all or part of these units can be integrated together, or implemented independently. The processing components mentioned here may be an integrated circuit with signal processing capabilities. In an implementation process, each operation of the above method or each module above may be implemented by an integrated logic circuit of hardware in a component of a processor 71 or an instruction in a form of software.

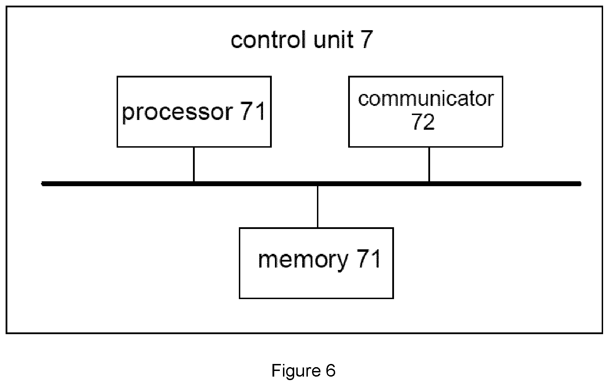

It should be noted that, as shown in FIG. 6, the control method of the robotic mower of the disclosure may also be implemented by a control unit 7 arranged on the body of the robotic mower. The control unit 7 includes a memory 73 and the processor 71 connected with each other. The memory 73 stores program instructions, and when the program instructions are executed by the processor 71, the above-mentioned control method of the robotic mower is implemented. It should be noted that, when communication with the outside is required, the control unit 7 further includes a communicator 72 connected with the processor 71.

Above-mentioned processor 71 may be general processor, which includes Central Processing Unit (CPU for short), Network Processor (NP for short) etc. It may also be a Digital Signal Processing (DSP for short), Application Specific Integrated Circuit (ASIC for short), Field Programmable Gate Array (FPGA for short) or other programmable logic devices, discrete gate or transistor logic devices, discrete hardware components. The above-mentioned memory 73 may include a Random Access Memory (RAM for short), and may also include a Non-Volatile Memory, such as at least one disk memory.

It should be noted that the control program instructions in the above memory 73 may be implemented in a form of software function units and may be stored in a computer-readable storage medium when sold or used as an independent product. Based on this understanding, an essence of the technical solution of the disclosure or a part that contributes to the conventional art or a part of the technical solution may be embodied in a form of software products. The computer software product is stored in the storage medium, and includes several instructions to enable a computer device (which may be a personal computer, electronic device, or network device, etc.) to execute all or part of the operations of the methods of various embodiments of the disclosure.

The disclosure further provides a storage medium which stores a program. When the program is executed by the processor 71, the above-mentioned control method of the robotic mower is implemented. The storage medium includes all forms of non-volatile memory, media and memory devices, which includes for example: semiconductor memory devices such as EPROM, EEPROM and flash memory devices, disks such as internal hard disks or removable disks, magneto-optical disks, or CD-ROM and DVD-ROM.

In summary, with the robotic mower and the control method, the system and the storage medium thereof, each time the robotic mower mows, it selects any path map from the pre-stored path map set, so that the walking path of the robotic mower is different each time, which avoids a problem of repeated rolling and forming ruts when walking along a fixed path. Compared with a random operation method, the robotic mower and its control method, system and storage medium of the disclosure may not only cover 100% of the working area, but also reduce unnecessary repeated operations and reduce use of parts. With the robotic mower and the control method, the system and the storage medium thereof, it may complete work of the entire working area in one operation if the battery allows it. With the robotic mower and the control method, the system and the storage medium thereof, it is possible to estimate an exact time a lawn will need to be mowed, in other words a time the lawn will be ready.

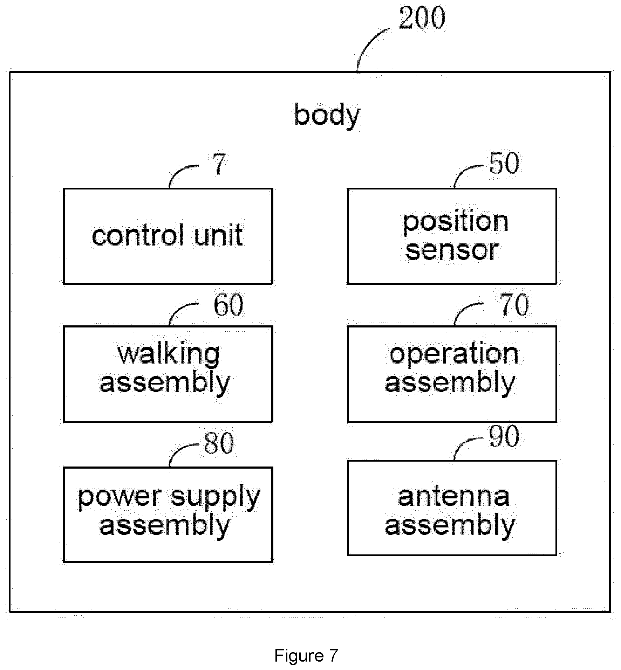

Please refer to FIG. 7. The disclosure further provides the robotic mower 200. The robotic mower 200 includes a body, a position sensor 50, the control unit 7, a walking assembly 60, an operation assembly 70, a power supply assembly 80 and an antenna assembly 90 arranged on the body. The control unit 7 may control the robotic mower 200 to walk along different paths each time it works, so as to avoid ruts caused by repeated rolling of the working area.

Please refer to FIG. 7. The walking assembly 60 includes two driving wheels and at least one supporting wheel. The two driving wheels are respectively arranged on both sides of one end of the body, and the supporting wheel is arranged on the other end of the body. The robotic mower 200 is supported by the driving wheels and the supporting wheel for travel, and the supporting wheel may be universal wheels, so that the robotic mower 200 may turn. The driving wheel may be connected with a driving motor through a transmission shaft, for example, and a protective cover is arranged on the transmission shaft. The protective cover includes a flexible section, and the protective cover may change its length along an axial direction of the transmission shaft through a deformation of the flexible section, which effectively protects the transmission shaft and increases a duration life of the robotic mower 200. The control unit 7 controls a walking direction and speed of the robotic mower 200 through controlling rotation speeds of the two driving motors. When the rotation speed of the driving motor is different, the robotic mower 200 may realize turning. When the rotation speeds of the driving motors are the same, the robotic mower 200 may walk in a straight line, and when the rotation speeds of the driving motors are opposite, the robotic mower 200 may realize a zero-position steering in situ.

Please refer to FIG. 7. The operation assembly 70 includes a cutting motor and a cutter driven by the cutting motor. The operation assembly 70 is roughly located at a center of the robotic mower 200, and a rotation axis of the cutting motor is approximately perpendicular to a horizontal plane. The operation assembly 70 may be used by the operator to adjust a height to the ground, so as to realize an adjustment of a cutting height.

Please refer to FIG. 7. The power supply assembly 80 includes a rechargeable battery, a charging system for supplying power to the rechargeable battery, and a solar panel arranged outside the body, and the solar panel is connected with the rechargeable battery through the charging system. Considering that the robotic mower 200 generally works outdoors, the rechargeable battery may be charged during the mowing operation of the robotic mower 200, thereby effectively prolonging a working time of the robotic mower 200 and reducing the number of times of returning to the charging station to recharge.

Please refer to FIG. 7. In addition to the functions described above, the control unit 7 may also receive various signals sent to the robotic mower 200 or signals collected by the position sensor 50, and generate corresponding control signals through an internal processor. A walking unit or an operation unit is controlled according to the generated control signal, so that the robotic mower 200 performs the mowing operation along the planned path.

The robotic mower 200 further includes the rain and snow sensor and/or wind speed sensor that are arranged on the body, which is used for monitoring the weather condition of working places of the robotic mower 200, and weather condition information is delivered to the control unit 7. The control unit 7 controls the robotic mower 200 to perform corresponding operations according to the weather condition information. For details, refer to the relevant part of the description above, and details will not be repeated here.

Please refer to FIG. 7. The position sensor 50 may be, for example, the GPS module. Usually, in order to include the GPS module, the GPS module is generally arranged inside the body, which will affect a signal strength of the GPS module. In order to solve this problem, the antenna assembly 90 may be added to the GPS module to enhance the signal strength of the GPS module and improve a positioning accuracy of the robotic mower 200. The antenna assembly 90 includes an antenna, an antenna housing and a soft buffer connector. The soft buffer connector may be rubber, silicone and other soft rubber with good elasticity and self-recovery. The Antenna is usually made of conductive metal. The antenna housing wraps the antenna for protection, and a bottom of the antenna housing may be fixed to the soft buffer connector by sticking, for example. The soft buffer connector is fixed on the body by screws or sticking, and the antenna housing is basically vertical relative to an upper surface of the body. A shape of the soft buffer connector is symmetrical to its center, and a purpose is to balance a pulling force of the soft buffer connector on the antenna housing and cancel each other in a horizontal direction. The soft buffer connector fixes the antenna housing on the body and fills a gap between the antenna housing and the body, which may prevent water vapor from entering the machine and damaging electrical components. When the moving robotic mower is not subjected to external force, the antenna housing is basically perpendicular to the body. When the antenna housing is subjected to external force, the antenna housing is tilted relative to the body, and the soft buffer connector is pulled and deformed, which stores elastic potential energy. When the external force acting on the antenna housing disappears, the soft buffer connector releases the elastic potential energy, and under an action of the soft buffer connector, the antenna housing returns to a vertical state.

In the description of the specification, numerous specific details are provided, such as examples of components and/or methods, to provide a thorough understanding of embodiments of the disclosure. However, one skilled in the art will recognize that embodiments of the disclosure may be practiced without one or more of the specific details, or with other devices, systems, assemblies, methods, components, materials, parts, and the like. In other cases, well-known structures, materials, or operations are not specifically shown or described in detail to avoid obscuring aspects of embodiments of the disclosure.

It should also be understood that one or more of the components shown in the drawings may also be implemented in a more separate or integrated manner, or may even be removed as inoperable in some cases or provided as may be useful depending on a particular application.

In addition, unless expressly indicated otherwise, any marking arrows in the drawings should be regarded only as exemplary instead of limiting. What's more, unless specified otherwise, the term "or" as used herein generally means "and/or." In cases where the term is foreseen because it is unclear to provide separation or combination capabilities, the combination of components or operations will also be regarded as specified.

The above description of the illustrated embodiment of the disclosure (including content described in the abstract of the specification) is not intended to exhaustively enumerate or limit the disclosure to the precise form provided herein. Although specific embodiments of the disclosure and examples of the disclosure are described herein for illustrative purposes only, as those skilled in the art recognize and understand, various equivalent modifications are possible within the scope of the disclosure. As pointed out, these modifications may be made to the disclosure according to the above description of the embodiments of the disclosure, and these modifications will be within the scope of the disclosure.

This specification has generally described the system and method which are helpful in understanding the details of the disclosure. In addition, various specific details have been given to provide an overall understanding of the embodiments of the disclosure. However, those skilled in the relevant art will recognize that the embodiments of the disclosure may be realized without one or more specific details, or may be implemented through using other devices, systems, accessories, methods, assemblies, materials, parts, etc. In other cases, well-known structures, materials, and/or operations are not specifically shown or described in detail to avoid confusion in various aspects of the embodiments of the disclosure.

Therefore, although the disclosure has been described herein with reference to its specific embodiments, a freedom of modification, various changes and substitutions are also included in the above disclosure. And it should be understood that in some cases, without departing from the scope of the disclosure, some features of the disclosure will be adopted under the conditions without corresponding use of other features. Therefore, many modifications may be made to enable a specific environment or material to adapt the essential scope of the disclosure. The disclosure is not intended to limit the specific terms used in the claims and/or specific embodiments disclosed as the best embodiment for carrying out the disclosure, but the disclosure will include any and all embodiments and equivalents falling within the scope of the appended claims. Therefore, the scope of the disclosure will only be determined by the appended claims.

## Claims

1. A control method of a robotic mower, comprising:
controlling the robotic mower to move to a starting point;
selecting a path map from a pre-stored path map set; and
controlling the robotic mower to move and work according to the selected path map, wherein
the path map set is a path map pre-planned according to different moving angles according to a working area of the robotic mower.

2. The control method of the robotic mower according to claim 1, wherein
an obtaining method of the path map set comprises:
defining a working area map of the robotic mower;
respectively planning the path maps when the robotic mower moves along different moving angles in the working area according to the working area map of the robotic mower to form the path map set.

3. The control method of the robotic mower according to claim 2, wherein
in an operation of respectively planning the path maps when the robotic mower moves along different moving angles in the working area according to the working area map of the robotic mower, optimizing the path map to minimize a number of turns of the robotic mower.

4. The control method of the robotic mower according to claim 2, wherein
the moving angle of the robotic mower is between 0° and 180°.

5. The control method of the robotic mower according to claim 2, wherein
defining the working area map of the robotic mower comprises:
controlling the robotic mower to move along an edge of the working area, and collecting and saving a position of the working area so as to obtain the working area map.

6. The control method of the robotic mower according to claim 2, wherein defining the working area map of the robotic mower further comprises:
controlling the robotic mower to move along an edge of an obstacle in the working area, collecting and saving a position of the obstacle, and marking the position of the obstacle as an exclusion area in the working area map.

7. The control method of the robotic mower according to claim 2, wherein
a position sensor is adopted to define the working area map of the robotic mower.

8. The control method of the robotic mower according to claim 7, wherein
the position sensor comprises a global positioning module.

9. The control method of the robotic mower according to claim 1, wherein
controlling the robotic mower to move and work according to the selected path map comprises: when the power of the robotic mower is insufficient, controlling the robotic mower to return to a charging station and recording a returning position point of the robotic mower, after charging is completed, the robotic mower returning to the returning position point and continuing to move along original path.

10. The control method of the robotic mower according to claim 1, wherein
controlling the robotic mower to move and work according to the selected path map comprises: when weather conditions are not suitable for the robotic mower to work, controlling the robotic mower to return to the charging station and recording returning position point of the robotic mower, after charging is completed or when the weather conditions are suitable for the robotic mower to work, the robotic mower returning to the returning position point and continuing to move along original path.

11. The control method of the robotic mower according to claim 1, wherein
the path map set is a path map pre-planned according to different moving angles and working widths according to the working area of the robotic mower.

12. The control method of the robotic mower according to claim 1, further comprising: presetting a mowing period, the robotic mower performing mowing operations within the preset mowing period, and stopping mowing out of the preset mowing period.

13. The control method of the robotic mower according to any one of claims 1-12, wherein
selecting the path map from the pre-stored path map set comprises randomly selecting a path map from the pre-stored path map set.

14. The control method of the robotic mower according to any one of claims 1-12, wherein
selecting the path map from the pre-stored path map set comprises selecting a path map from the pre-stored path map set each time according to an increment or decrement of the moving angle.

15. The control method of the robotic mower according to any one of claims 1-12, wherein
selecting the path map from the pre-stored path map set comprises selecting a path map from the pre-stored path map set according to a received external instruction.

16. A control system of a robotic mower, comprising:
a moving module, configured to control the robotic mower to move to a starting point;
a map selection module, configured to select a path map from a pre-stored path map set, wherein the path map set is a path map planned in advance according to different moving angles according to a working area of the robotic mower;
an operation module, controlling the robotic mower to move according to the selected path map.

17. The control system of the robotic mower according to claim 16, further comprising a path map set obtaining module, wherein
the path map set obtaining module comprises:
an area map definition module, configured to define a working area map of the robotic mower;
a path map planning module, configured to respectively plan the path maps of the robotic mower according to the working area map of the robotic mower when moving along different moving angles in the working area to form the path map set.

18. The control system of the robotic mower according to claim 17, wherein
the path map planning module further comprises a path optimization module, configured to minimize a number of turns of the robotic mower to optimize the path map.

19. The control system of the robotic mower according to claim 17, wherein
the moving angle of the robotic mower is between 0° and 180°.

20. The control system of the robotic mower according to claim 17, wherein
the area map definition module further comprises a map obtaining module configured to control the robotic mower to walk along an edge of the working area, collect and save a position of the working area so as to obtain the working area map.

21. The control system of the robotic mower according to claim 17, wherein
the path map set obtaining module further comprises an exclusion module, configured to control the robotic mower to walk along an edge of an obstacle in the working area, collect and save a position of the obstacle, and mark the position of the obstacle as an exclusion area in the working area map.

22. The control system of the robotic mower according to claim 17, wherein
the operation module further comprises a charging module, configured to control the robotic mower to return to a charging station and record a returning position point of the robotic mower when the power of the robotic mower is insufficient, after charging completed, the robotic mower returning to the returning position point and continuing to move along original path.

23. The control system of the robotic mower according to claim 16, wherein
the path map set is the path map pre-planned according to different moving angles and working widths in the working area of the robotic mower.

24. The control system of the robotic mower according to claim 17, wherein
the path map planning module is further configured to respectively plan the path maps of the robotic mower when moving along different moving angles and different working widths in the working area according to the working area map of the robotic mower to form the path map set.

25. The control system of the robotic mower according to claim 17, wherein
the operation module further comprises a charging module, configured to control the robotic mower to return to a charging station and record a returning position point of the robotic mower when weather conditions are not suitable for the robotic mower to work, after charging completed or when the weather conditions are suitable for the robotic mower to mow, the robotic mower returning to the returning position point and continuing to move along original path.

26. The control system of the robotic mower according to claim 16, further comprising: a mowing period setting module, configured to preset a mowing period, so as to control the robotic mower to mow in the preset mowing period and stop mowing out of the preset mowing period.

27. The control system of the robotic mower according to any one of claims 16-26, wherein
the map selection module comprises a first map selection module, configured to randomly select a path map from the pre-stored path map set.

28. The control system of the robotic mower according to any one of claims 16-26, wherein
the map selection module comprises a second map selection module, configured to select a path map from the pre-stored path map set each time according to an increment or decrement of the moving angle.

29. The control system of the robotic mower according to any one of claims 16-26, wherein
the map selection module comprises a third map selection module, configured to select a path map from the pre-stored path map set according to a received external instruction.

30. A robotic mower, comprising:
a body;
a position sensor, arranged on the body; and
a control unit, arranged on the body, comprising a processor and a memory coupled to each other, the memory storing program instructions being executed by the processor to perform the control method of the robotic mower according to any one of claims 1-9.

31. The robotic mower according to claim 30, wherein
the position sensor comprises a global positioning module.

32. The robotic mower according to claim 30, further comprising:
a rain and snow sensor and/or a wind speed sensor.

33. A storage medium, comprising:
a program, enabling a computer to perform the control method of the robotic mower according to any one of claims 1-15 when the program running on the computer.
